# EUROPÄISCHE PATENTSCHRIFT

(11) **EP 1 518 820 B1**
(45) Veröffentlichungstag und Bekanntmachung des Hinweises auf die Patenterteilung: **03.12.2008**
(21) Anmeldenummer: 04021986.7
(22) Anmeldetag: 16.09.2004
(51) Int. Cl.: B67D 3/04, B67D 5/33

(54) **Entnahmearmatur aus Kunststoff für Transport- und Lagerbehälter für Flüssigkeiten**
Plastic tap-armature for transport and storing containers for liquids
Armature de robinet en plastique pour conteneur de transport et de stockage de liquides

(30) Priorität: 27.09.2003 DE 10344962
(43) Veröffentlichungstag der Anmeldung: 30.03.2005
(73) Patentinhaber: PROTECHNA S.A., 1701 Fribourg (CH)
(72) Erfinder: Schütz, Udo, 56242 Selters/Westerwald (DE)
(74) Vertreter: Pürckhauer, Rolf

(56) Entgegenhaltungen:
- EP-A- 0 890 546
- EP-A- 1 153 881
- EP-A- 1 333 213
- WO-A-97/45362
- DE-C- 19 715 077
- DE-U- 9 411 864

## Beschreibung

Die Erfindung betrifft eine Entnahmearmatur aus Kunststoff, insbesondere einen Klappen- oder Kugelhahn, für Transport- und Lagerbehälter aus Kunststoff für Flüssigkeiten, mit einem Armaturengehäuse, das einen Einlaufstutzen aufweist, der mittels einer Überwurfmutter an den mit einem Außengewinde versehenen Auslaufstutzen des Flüssigkeitsbehälter anschraubbar ist, und das einen Auslaufstutzen besitzt (DE 101 24 681 A1).

Als Klappenhähne ausgebildete Entnahmehähne der gattungsgemäßen Art werden bei Flüssigkeitsbehältern verwendet, die mit einem palettenartigen Untergestell, einem austauschbaren Innenbehälter aus Kunststoff mit vier Seitenwänden, einem unteren und einem oberen Boden, einem Einfüllstutzen und einem Auslaufstutzen sowie mit einem den Innenbehälter umgebenden Außenmantel ausgestattet sind, der als Blechmantel oder Gittermantel aus senkrechten und waagrechten Gitterstäben aus Metall ausgebildet ist.

Bei einer unsachgemäßen Montage der vom Hersteller mitgelieferten Entnahmearmatur durch den Kunden an den Auslaufstutzen des Innenbehälters eines Palettenbehälters gemäß der DE 195 11 723 C1 besteht die Gefahr, daß die Entnahmearmatur derart verdreht wird, daß die Dichtung der Armatur verschoben und beschädigt und dadurch die Armatur undicht wird.

Die EP 1 333 213 stellt den naheliegensten Stand der Technik dar.

Der Erfindung liegt die Aufgabe zugrunde, die gattungsgemäße Entnahmearmatur im Hinblick auf eine größtmögliche Verdrehsicherheit zur Verhinderung einer Beschädigung der Dichtung der Armatur bei der Montage weiterzuentwickeln.

Diese Aufgabe ist erfindungsgemäß gelöst durch Entnahmearmaturen mit Verdrehsicherungen gemäß den Patentansprüchen 1 und 4.

Die Unteransprüche beinhalten vorteilhafte und zweckmäßige Weiterbildungen der Entnahmearmatur.

Die Erfindung ist nachstehend anhand von Zeichnungsfiguren erläutert, die folgendes darstellen:
- Fig. 1: eine Längsschnittdarstellung eines Klappenhahns mit einer ersten Ausführungsform einer Verdrehsicherung,
- Fig. 2: eine Stirnansicht des Klappenhahns,
- Fig. 3: den Einlaufstutzen des Hahngehäuses des Klappenhahns nach den Figuren 1 und 2 in perspektivischer Darstellung,

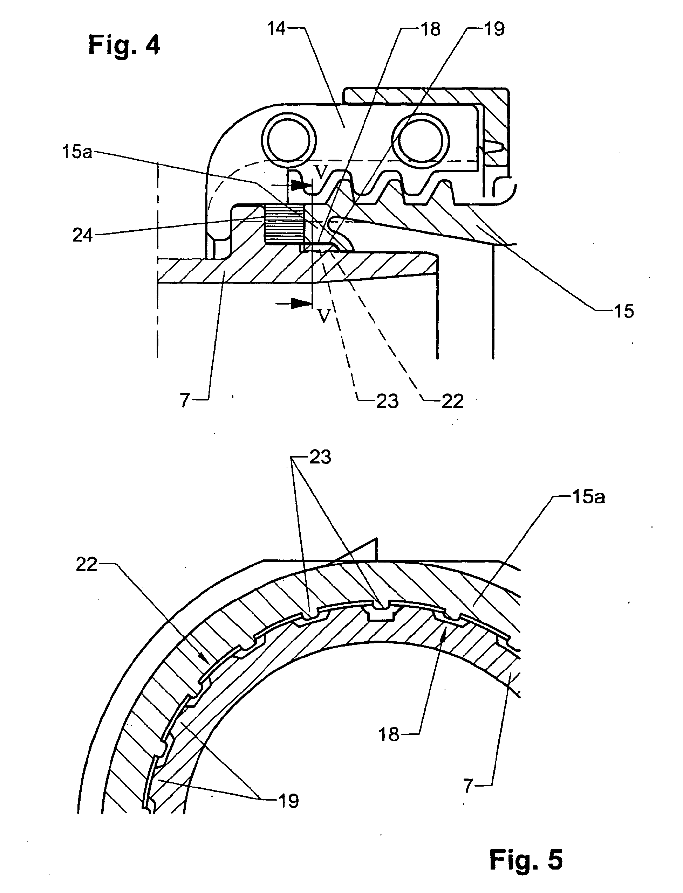

- Fig. 4: eine vergrößerte Teildarstellung der Verdrehsicherung gemäß Ausschnitt IV der Fig. 1,
- Fig. 5: einen Querschnitt der Verdrehsicherung gemäß Linie V-V der Fig. IV und
- Fig. 6: eine Längsschnittdarstellung eines Klappenhahns mit einer weiteren Ausführungsform der Verdrehsicherung.

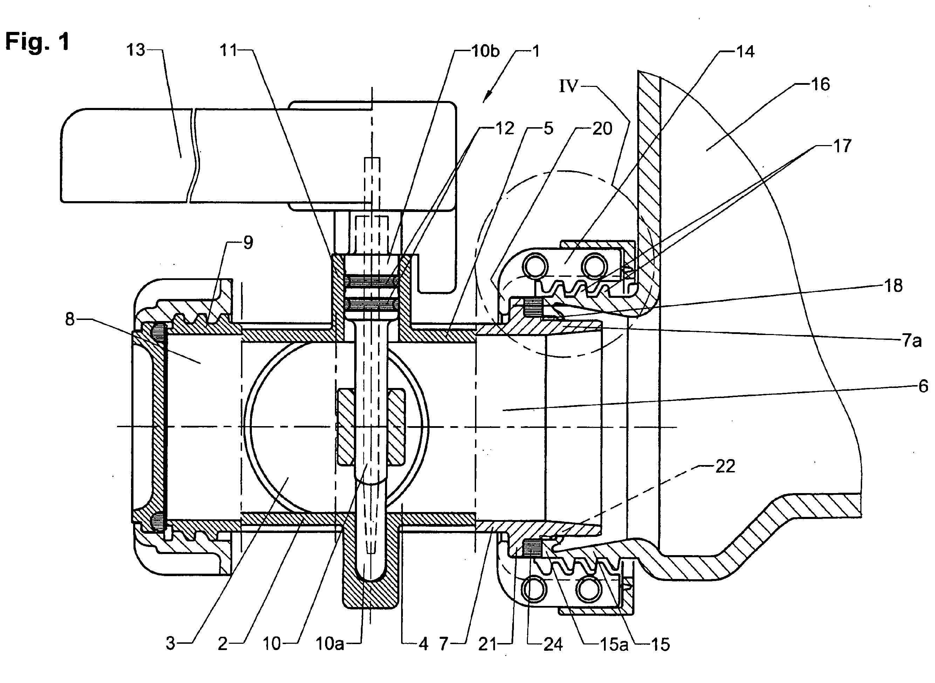

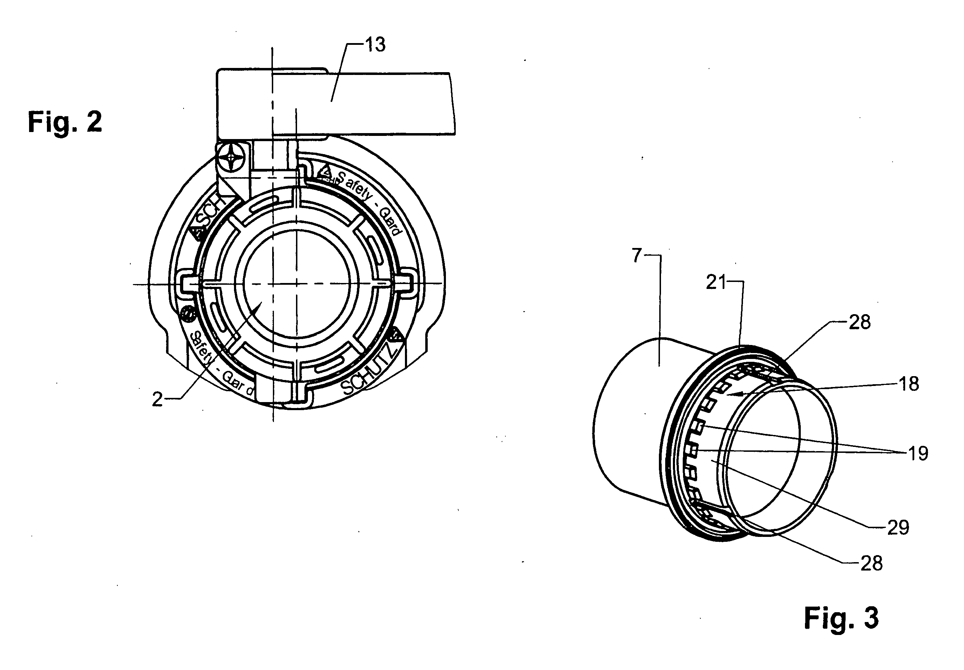

Das aus einem Polyethylen hoher Dichte (PE-HD) hergestellte Hahngehäuse 2 des Klappenhahns 1 nach den Figuren 1 und 2 nimmt eine Klappenscheibe 3 zum Öffnen und Schließen der zentralen Durchflußöffnung 4 der Gehäusekammer 5 auf, die mit dem Einlaufkanal 6 eines mit dem Hahngehäuse 2 verschweißten Einlaufstutzens 7 und dem Auslaufkanal 8 des Auslaufstutzens 9 des Hahngehäuses 2 in Verbindung steht. Die Klappenscheibe 3 ist exzentrisch an einer Drehwelle 10 befestigt, deren eines Ende 10a im Hahngehäuse 2 drehbar gelagert ist und deren anderes Ende 10b über einen Lagerstutzen 11 aus dem Hahngehäuse 2 nach außen vorsteht. Die Drehwelle 10 ist mittels Dichtringen 12 in dem Lagerstutzen 11 nach außen abgedichtet. Auf dem aus dem Hahngehäuse 2 herausragenden Ende 10b der Drehwelle 10 der Klappenscheibe 3 ist ein Handgriff 13 zum Öffnen und Schließen des Klappenhahns 1 angebracht.

Der Klappenhahn 1 ist mittels einer Überwurfmutter 14 an dem Auslaufstutzen 15 eines Flüssigkeitsbehälters 16, z.B. einem Kunststoff-Innenbehälter eines Palettenbehälters, befestigt, wobei der Flüssigkeitsbehälter 16 mit dem mit einem Außengewinde 17 versehenen Auslaufstutzen 9 einteilig durch Blasformen hergestellt ist.

Der Klappenhahn 1 hat eine Verdrehsicherung mit einem auf dem Einlaufstutzen 7 des Hahngehäuses 2 angeordneten äußeren Nockenkranz 18, dessen Rastnocken 19 beim Einziehen des Einlaufstutzens 7 des Hahngehäuses 2 in den Auslaufstutzen 15 des Flüssigkeitsbehälters 16 durch das Aufschrauben der auf dem Einlaufstutzen 7 des Hahngehäuses 2 unverlierbar gehaltenen Überwurfmutter 14, die mit einer Ringschulter 20 an einem Bund 21 des Einlaufstutzens 7 angreift, auf den Auslaufstutzen 15 des Flüssigkeitsbehälters 16 mit den Rastnocken 23 eines am äußeren Ende 15a des Auslaufstutzens 15 des Behälters 16 angeformten inneren Nockenkranzes 22 verrastet.

Der Klappenhahn 1 ist mittels eines auf dem Einlaufstutzen 7 des Hahngehäuses 2 sitzenden Dichtringes 24, der beim Aufschrauben der Überwurfmutter 14 auf den Auslaufstutzen 15 des Flüssigkeitsbehälters 16 zwischen dem Bund 21 des Einlaufstutzens 7 des Hahngehäuses 2 und dem äußeren Ende 15a des Auslaufstutzens 15 des Flüssigkeitsbehälters 16 eingespannt wird, gegen den Behälter abgedichtet.

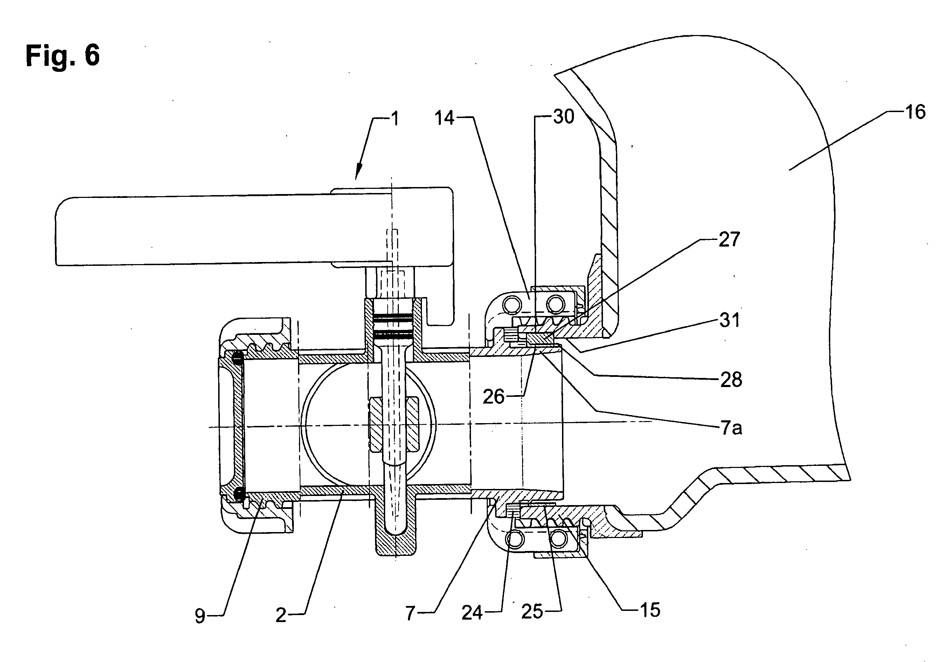

Die Figuren 6 und 3 zeigen einen Klappenhahn 1 mit einer weiteren Ausführungsform einer Verdrehsicherung mit einem Adapterring 25, der über den Umfang verteilt innere und äußere Rastnocken 26, 27 aufweist, wobei der auf das Einsetzende 7a des Einlaufstutzens 7 des Hahngehäuses 2 aufschiebbare Adapterring 25 mit den inneren Rastnocken 26 in entsprechende Längsnuten 28 im Außenmantel 29 des Einlaufstutzens 7 des Hahngehäuses 2 eingreift und der Adapterring 25 beim Einziehen des Einlaufstutzens 7 des Hahngehäuses 2 in den Auslaufstutzen 15 des Flüssigkeitsbehälters 16 durch Aufschrauben der auf dem Einlaufstutzen 7 des Hahngehäuses 2 unverlierbar gehaltenen Überwurfmutter 14 auf den Auslaufstutzen 15 des Flüssigkeitsbehälter 16 mit den äußeren Rastnocken 27 in entsprechende Längsnuten 30 im Innenmantel 31 des Auslaufstutzens 15 des Behälters 16 in Eingriff gelangt.

Bei der vorbeschriebenen zweiten Ausführungsform der Verdrehsicherung des Klappenhahns 1 ist der als Kunststoff-Spritzgußteil vorgefertigte Auslaufstutzen 15 mit dem Außengewinde 17 an den Flüssigkeitsbehälter 16 angeblasen.

Der in Figur 3 dargestellte, an das Hahngehäuse 2 des Klappenhahns 1 angeschweißte Einlaufstutzen 7 wird als Kunststoff-Spritzgußteil mit dem Nockenkranz 18 sowie den Längsnuten 28 hergestellt, so daß der Klappenhahn 1 wahlweise mit der einen oder der anderen vorbeschriebenen Verdrehsicherung ausgestattet werden kann.

## Patentansprüche

1. Entnahmearmatur aus Kunststoff, insbesondere Klappen-oder Kugelhahn, für Transport- und Lagerbehälter aus Kunststoff für Flüssigkeiten, mit einem Armaturengehäuse, das einen Einlaufstutzen aufweist, der mittels einer Überwurfmutter an den mit einem Außengewinde versehenen Auslaufstutzen des Flüssigkeitsbehälters anschraubbar ist, und das einen Auslaufstutzen besitzt, **gekennzeichnet durch** eine Verdrehsicherung mit einem auf dem Einlaufstutzen (7) des Armaturengehäuses (Hahngehäuse 2) angeordneten äußeren Nockenkranz (18), dessen Rastnocken (19) beim Einziehen des Einlaufstutzens (7) des Hahngehäuses (2) in den Auslaufstutzen (15) des Flüssigkeitsbehälters (16) **durch** das Aufschrauben der auf dem Einlaufstutzen (7) des Hahngehäuses (2) unverlierbar gehaltenen Überwurfmutter (14) auf den Auslaufstutzen (15) des Flüssigkeitsbehälters (16) mit den Rastnocken (23) eines am äußeren Ende (15a) des Auslaufstutzens (15) des Behälters (16) angeformten inneren Nockenkranzes (22) verrastet.

2. Entnahmearmatur nach Anspruch 1, **dadurch gekennzeichnet, daß** der Einlaufstutzen (7) des Hahngehäuses (2) mit dem Nockenkranz (18) als Kunststoff-Spritzgußteil gefertigt und mit dem Hahngehäuse (2) verschweißt ist.

3. Entnahmearmatur nach Anspruch 1 und 2, **dadurch gekennzeichnet, daß** der Flüssigkeitsbehälter (16) mit dem mit einem Außengewinde (17) versehenen Auslaufstutzen (15) einteilig durch Blasformen hergestellt ist.

4. Entnahmearmatur nach dem Oberbegriff des Anspruchs 1, **gekennzeichnet durch** eine Verdrehsicherung mit einem Adapterring (25), der über den Umfang verteilt innere und äußere Rastnocken (26, 27) aufweist, wobei der auf das Einsetzende (7a) des Einlaufstutzens (7) des Hahngehäuses (2) aufschiebbare Adapterring (25) mit den inneren Rastnocken (26) in entsprechende Längsnuten (28) im Außenmantel (29) des Einlaufstutzens (7) des Hahngehäuses (2) eingreift und der Adapterring (25) beim Einziehen des Einlaufsstutzens (7) des Hahngehäuses (2) in den Auslaufstutzen (15) des Flüssigkeitsbehälters (16) **durch** Aufschrauben der auf dem Einlaufstutzen (7) des Hahngehäuses (2) unverlierbar gehaltenen Überwurfmutter (14) auf den Auslaufstutzen (15) des Flüssigkeitsbehälters (16) mit den äußeren Rastnocken (27) in entsprechende Längsnuten (30) im Innenmantel (31) des Auslaufstutzens (15) des Behälters (16) in Eingriff gelangt.

5. Entnahmearmatur nach Anspruch 4, **dadurch gekennzeichnet, daß** der als Kunststoff-Spritzgußteil vorgefertigte, mit einem Außengewinde (17) versehene Auslaufstutzen (15) an den Flüssigkeitsbehälter (16) angeblasen ist.

6. Entnahmearmatur nach dem Oberbegriff des Anspruchs 1, **gekennzeichnet durch** einen auf dem Einlaufstutzen (7) des Hahngehäuses (2) angeordneten äußeren Nockenkranz (18) und im Außenmantel (29) des Einlaufstutzens (7) ausgebildete Längsnuten (28) zur wahlweisen Anbringung der Verdrehsicherung nach Anspruch 1 oder 4.

## Claims

1. Plastic removal fitting, in particular a lever tap or ball valve, for plastic transport and storage containers for liquids, with a fitting housing, which has an inlet connecting piece that can be screwed onto the outlet connecting piece of the liquid container provided with an external thread by means of a swivel nut, and which has an outlet connecting piece, **characterised by** an anti-twist protection with an outer cam ring (18), which is arranged on the inlet connecting piece (7) of the fitting housing (tap housing 2) and the locking cam (19) of which locks with the locking cam (23) of an internal cam ring (22) moulded on the outer end (15a) of the outlet connecting piece (15) of the container (16) when the inlet connecting piece (7) of the tap housing (2) retracts into the outlet connecting piece (15) of the liquid container (16) by screwing the swivel nut (14) undetachably held on the inlet connecting piece (7) of the tap housing (2) onto the outlet connecting piece (15) of the liquid container (16).

2. Removal fitting according to claim 1, **characterised in that** the inlet connecting piece (7) of the tap housing (2) with the cam ring (18) is produced as a plastic injection moulding and is welded to the tap housing (2).

3. Removal fitting according to claim 1 and 2, **characterised in that** the liquid container (16) with the outlet connecting piece (15) provided with an external thread (17) is produced in one piece by blow-moulding.

4. Removal fitting according to the preamble of claim 1, **characterised by** an anti-twist protection with an adapter ring (25), which has internal and external locking cams (26, 27) distributed over the periphery, wherein the adapter ring (25) that can be slid onto the insertion end (7a) of the inlet connecting piece (7) of the tap housing (2) engages with the internal locking cams (26) into corresponding longitudinal grooves (28) in the outer shell (29) of the inlet connecting piece (7) of the tap housing (2) and the adapter ring (25) with the external locking cams (27) engages into corresponding longitudinal grooves (30) in the inner shell (31) of the outlet connecting piece (15) of the container (16) by screwing the swivel nut (14) undetachably held on the inlet connecting piece (7) of the tap housing (2) onto the outlet connecting piece (15) of the liquid container (16).

5. Removal fitting according to claim 4, **characterised in that** the outlet connecting piece (15), which is prefabricated as a plastic injection moulding and is provided with an external thread (17), is blown onto the liquid container (16).

6. Removal fitting according to the preamble of claim 1, **characterised by** an external cam ring (18) arranged on the inlet connecting piece (7) of the tap housing (2) and by longitudinal grooves (28) configured in the outer shell (29) of the inlet connecting piece (7) for selective attachment of the anti-twist protection according to claim 1 or 4.

## Revendications

1. Robinet de prélèvement en matière plastique, notamment robinet à volet ou à bille, pour des cuves de transport et de stockage en matière plastique de liquide, comprenant un corps de robinet qui a une tubulure d'entrée pouvant être vissée au moyen d'un écrou-raccord à la tubulure filetée de sortie de la cuve à liquide et qui a une tubulure de sortie, **caractérisé par** une sécurité à la torsion, comprenant une couronne ( 8 ) extérieure de bossages, qui est disposée sur la tubulure ( 7 ) d'entrée du corps du robinet ( corps 2 du robinet ) et dont les bossages ( 19 ) d'encliquetage s'encliquètent, lors de l'emmanchement de la tubulure ( 7 ) d'entrée du corps ( 2 ) du robinet dans la tubulure ( 15 ) de sortie de la cuve ( 16 ) à liquide par le vissage de l'écrou-raccord ( 14 ) maintenu de manière imperdable sur la tubulure ( 7 ) d'entrée du corps ( 2 ) du robinet sur la tubulure ( 15 ) de sortie de la cuve ( 16 ) à liquide, avec les bossages ( 23 ) d'encliquetage d'une couronne ( 22 ) intérieure de bossages formée à l'extrémité ( 15a ) extérieure de la tubulure ( 15 ) de sortie de la cuve ( 16 ).

2. Robinet de prélèvement suivant la revendication 1, **caractérisé en ce que** la tubulure ( 7 ) d'entrée du corps ( 2 ) du robinet est fabriquée avec la couronne ( 18 ) de bossages sous la forme d'une pièce moulée par injection en matière plastique et est soudée au corps ( 2 ) du robinet.

3. Robinet de prélèvement suivant la revendication 1 et 2, **caractérisé en ce que** la cuve ( 16 ) à liquide est fabriquée par moulage par soufflage d'une seule pièce avec la tubulure ( 15 ) de sortie munie d'un filetage ( 17 ).

4. Robinet de prélèvement suivant le préambule de la revendication 1, **caractérisé par** une sécurité à la torsion comprenant un anneau ( 25 ) formant adaptateur qui a répartis sur le pourtour des bossages ( 26, 27 ) intérieurs et extérieurs d'encliquetage, l'anneau ( 25 ) formant adaptateur, qui peut coulisser sur l'extrémité ( 7a ) d'entrée de la tubulure ( 7 ) d'entrée du corps ( 2 ) du robinet, pénétrant par les bossages ( 26 ) intérieurs d'encliquetage dans des rainures ( 28 ) longitudinales correspondantes de la surface ( 29 ) latérale extérieure de la tubulure ( 7 ) d'entrée du corps ( 2 ) du robinet et l'anneau ( 25 ) formant adaptateur coopérant, lorsque la tubulure ( 7 ) d'entrée du corps ( 2 ) du robinet est emmanchée dans la tubulure ( 15 ) de sortie de la cuve ( 16 ) à liquide par vissage de l'écrou-raccord ( 14 ) maintenu de façon imperdable sur la tubulure ( 7 ) d'entrée du corps ( 2 ) du robinet sur la tubulure ( 15 ) de sortie de la cuve ( 16 ) à liquide, avec les bossages ( 27 ) extérieurs d'encliquetage dans des rainures ( 30 ) longitudinales correspondantes de la surface ( 31 ) latérale intérieure de la tubulure ( 15 ) de sortie de la cuve ( 16 ).

5. Robinet de prélèvement suivant la revendication 4, **caractérisé en ce que** la tubulure ( 15 ) de sortie, préfabriquée sous la forme d'une pièce moulée par injection en matière plastique et ayant un filetage ( 17 ), est moulée par soufflage sur la cuve ( 16 ) à liquide.

6. Robinet de prélèvement suivant le préambule de la revendication 1, **caractérisé par** une couronne ( 18 ) extérieure de bossages disposée sur la tubulure ( 7 ) d'entrée du corps ( 2 ) du robinet et par des rainures ( 28 ) longitudinales formées sur la surface ( 29 ) latérale extérieure de la tubulure ( 7 ) d'entrée pour mettre au choix la sécurité à la torsion suivant la revendication 1 ou 4.
